# EUROPÄISCHE PATENTSCHRIFT

(11) **EP 3 655 217 B1**
(45) Veröffentlichungstag und Bekanntmachung des Hinweises auf die Patenterteilung: **10.11.2021**
(21) Anmeldenummer: 18737313.9
(22) Anmeldetag: 12.07.2018
(51) Int. Cl.: B27N 7/00, B27N 3/06, B27N 3/14, B27N 3/18, B05C 19/04, B27N 3/08, B07B 13/16, B65G 69/04

(54) **VERFAHREN ZUR HERSTELLUNG EINER HOLZWERKSTOFFPLATTE, INSBESONDERE EINER MDF- ODER HDF-PLATTE**
METHOD FOR MANUFACTURING A WOODEN PANEL, IN PARTICULAR AN MDF OR HDF PANEL
PROCÉDÉ DE FABRICATION D'UN PANNEAU EN BOIS, EN PARTICULIER D'UN PANNEAU MDF OU HDF

(30) Priorität: 20.07.2017 EP 17182396
(43) Veröffentlichungstag der Anmeldung: 27.05.2020
(73) Patentinhaber: Swiss Krono TEC AG, 6004 Luzern (CH)
(72) Erfinder: KALWA, Norbert, 32805 Horn-Bad Meinberg (DE); SIEBERT, Axel, 17207 Röbel (DE)
(74) Vertreter: Gramm, Lins & Partner Patent- und Rechtsanwälte PartGmbB
(86) Internationale Anmeldenummer: PCT/EP2018/069010
(87) Internationale Veröffentlichungsnummer: WO 2019/016083

(56) Entgegenhaltungen:
- EP-A1- 3 189 952
- WO-A1-2014/025309
- WO-A1-2014/025309
- DE-B4-102009 052 413
- JP-A- S5 663 858
- JP-A- 2008 149 487

## Beschreibung

Die Erfindung betrifft ein Verfahren zur Herstellung einer Holzwerkstoffplatte, insbesondere einer MDF- oder HDF-Platte, indem ein Kuchen aus mit einem Bindemittel benetzten Holzspänen oder Holzfasern gestreut wird, der anschließend in einer Heißpresse zu einer Platte gewünschter Dicke verpresst wird, wobei vor dem Verpressen auf eine Oberseite des Kuchens ein Gemischpulver aus Farbpigmenten und einem zweiten Bindemittel als Grundierungsmittel aufgestreut wird.

Ein solches Verfahren ist beispielsweise aus der EP 3 189 952 A1, die den Oberbegriff des Anspruchs 1 offenbart, bekannt. Mit ihm können glatte Oberflächen erzeugt werden, ohne dass eine nachfolgende Oberflächenbearbeitung notwendig wird. In dieser Druckschrift ist auch geschrieben, dass die für die ausreichende Deckkraft notwendige Pigmentmenge als wässriger Schlamm aufgetragen wird. Dies bringt auch eine erhebliche Menge Wasser auf die Oberfläche des gestreuten Kuchens. Zumindest ein Teil des Wassers muss durch Trocknung wieder entfernt werden, weil anderenfalls in der Faserplatte Dampfspalter auftreten können. Wenn Wasser in größeren Mengen asymmetrisch auf den Faserkuchen aufgebracht wird, kann sich beim Verpressen ein asymmetrischer Dampfstoß ausbilden. Auch dies ist bei der Fertigung ungünstig.

Bei dem aus der DE 10 2009 052 413 B4 bekannten Verfahren wird auf den aus Holzspänen oder Holzfasern gestreuten Kuchen vor dem Verpressen ein Grundierungsmittel berührungslos aufgebracht. Als Grundiermittel kann eine Dispersionsfarbe oder ein Lack verwendet werden. Dispersionsfarben sind in der Regel zähflüssige Farben bzw. Anstriche, die aus einer chemischen Dispersion (meistens einer Emulsion) aus Binde- und Lösungsmitteln, Farbmitteln (meistens Pigmenten) und Zusatzstoffen bestehen. Dieses flüssige Grundierungsmittel kann auf die Oberseite des Kuchens mittel Sprühdüsen oder mittels einer Zerstäubungsvorrichtung aufgesprüht werden.

Die nach diesem Verfahren hergestellten Holzwerkstoffplatten können beschichtet oder bedruckt werden und dann zu einzelnen Paneelen aufgeteilt und beispielsweise zur Ausbildung von Fußböden verwendet werden.

Die JP 2008 149487 A offenbart ein Verfahren, bei dem auf die Oberseite einer Holzwerkstoffplatte eine pastöse Beschichtung aus einem anorganischen Pulver, das Naturstein und ein nicht ausgehärtetes Bindemittel aufgetragen wird. Diese Paste wird in einer solchen Dicke aufgetragen, dass Unebenheiten ausgeglichen werden können. Nach Aushärten des Bindemittels wird die Oberfläche glatt geschliffen.

Aus der JP S56 63858 A ist ein Verfahren zum Herstellen nicht entflammbarer Baumaterialien bekannt, bei dem Portlandzement und sehr reines Siliziumdioxidpulver verwendet werden.

Bei der Herstellung von Laminatfußböden wurde zunächst mit harzimprägnierten Papieren gearbeitet, die in einer sogenannten Kurztaktpresse bei hohem Druck und hoher Temperatur auf Holzwerkstoffträger wie Dünnspanplatten oder hochdichten Faserplatten aufgepresst wurden. Als Imprägnate wurden dabei auf der Oberseite ein Overlay als Verschleißschutzschicht, ein Dekorpapier als Designträger und auf der Rückseite ein Gegenzug für die Spannungssymmetrie verwendet. Bei dieser Art der Fertigung muss der Nachteil in Kauf genommen werden, dass alle Papiere während des Imprägnierschrittes durch die Behandlung mit wasserhaltigen Kunstharzen einem unkontrollierten Längen- und Breitenwachstum unterliegen. Dies führt bei vorgegebenen Deckmaß, insbesondere in der Länge, zu einer Verschiebung des Druckbildes auf dem einzelnen Paneel.

Um diesen Mangel zu beheben wird in der EP 2 236 313 B1 vorgeschlagen, direkt auf die Oberseite der Holzwerkstoffplatte zu drucken. Dabei wird die Oberseite unmittelbar mit wasserhaltigen Kunstharz- und Pigmentformulierungen grundiert und getrocknet. Auf die Grundierung wird das Dekor aufgedruckt und die bedruckte Holzwerkstoffplatte dann in einer Kurztaktpresse verpresst. Das Aufbringen der Grundierung erfordert einen recht aufwendigen Prozess, weil mehrere Schichten übereinander aufgetragen und diese Schichten jeweils zwischengetrocknet werden müssen. Nach dem letzten Auftrag der Grundierung bzw. nach dem Dekordruck muss die Holzwerkstoffplatte, die sich durch das mehrfache Erwärmen in Umlufttrocknern stark erwärmt hat, aufwändig gekühlt werden. Der Fertigungsprozess ist deshalb recht energie- und anlagenintensiv. Eine für diesen Prozess konzipierte Anlage kann eine Länge von 150 bis 200 Metern erreichen. Produktionsgeschwindigkeiten von 60 bis 90 m/min sind üblich. Die Anlage hat damit einen erheblichen Platz- und Energiebedarf. Die einzelnen pigmentierten Grundierungsschichten werden mittels Walzenauftragsmaschinen nacheinander aufgebracht. Bei Produktionsabstellungen entsteht deshalb ein erheblicher Reinigungsbedarf an den Maschinen. Gleiches gilt für unvorhergesehene Betriebsunterbrechungen, da die für die Grundierung eingesetzten Flotten durch Verdunstung des Lösemittels ihre Viskosität ändern und damit auch Änderungen in der Deckkraft auftreten.

Aus der EP 2 226 201 B1 ist es bekannt, anstatt eine fertig gepresste Holzwerkstoffplatte mit einem Dekor zu bedrucken, den Dekordruck auf dem gestreuten Faserkuchen vorzunehmen. Zur Vorbereitung der Druckoberfläche kann auf die Oberseite des gestreuten Faserkuchens eine Schicht feinere Fasern mit Zusätzen wie Pigmenten, Harzen oder Salzen vorgesehen werden. Dieses Verfahren hat den Nachteil, dass ein derart komplexes Gemisch leicht zur Separierung neigt.

Von dieser Problemstellung ausgehend soll das gattungsgemäße Verfahren so verbessert werden, dass eine Holzwerkstoffplatte mit einer grundierten Oberseite geschaffen wird, mit dem die geschilderten Nachteile vermieden werden. Insbesondere soll die Grundierung gleichmäßig und einen möglichst hellen Farbton aufweisen, um das Bedrucken der fertig gepressten Holzwerkstoffplatte zu vereinfachen. Darüber hinaus sollen vorhandene Prozesse mit dem verbesserten Verfahren nicht beeinträchtigt werden und größere Investitionen nicht erforderlich sein.

Zur Problemlösung zeichnet sich das gattungsgemäße Verfahren dadurch aus, dass der Kuchen nach dem Aufstreuen des Gemischpulvers mit Wasser besprüht wird..

Durch die Verwendung eines Pulvers werden Lösungsmittel völlig eliminiert, der beschriebene Reinigungsaufwand entfällt und schädliche Emissionen durch Verdunsten beim Beschichten entfallen. Durch geeignete Auswahl der pulverförmigen Farbpigmente und der Dicke der gestreuten Gemischpulverschicht kann die Deckkraft der Grundierung eingestellt werden. Soll ein helles Dekor später auf die verpresste Holzwerkstoffplatte aufgedruckt, sollte die Grundierung möglichst hell sein. Wird ein dunkles Dekor aufgedruckt werden, kann die Grundierung auch dunkler sein bzw. weniger Deckkraft aufweisen, sodass die Gemischpulverschicht dünner gestreut werden kann. Durch das nachträgliche Befeuchten des aufgestreuten Gemischpulvers wird der Pigment- und Wasserauftrag entkoppelt. Es braucht nur so viel Wasser aufgebracht werden, wie tatsächlich für den Dampfstoß benötigt wird. Das Verfahren wird dadurch wesentlich wirtschaftlicher. Außerdem wird das aufgestreute Pulver fixiert und eine Staubbildung beim Einlauf des Kuchens in die nachfolgende Heißpresse vermieden werden.

Das Wasser wird vorzugsweise in einer Menge von 10 bis 30 g/m² aufgesprüht.

Wenn das erste Bindemittel und das zweite Bindemittel zumindest im Wesentlichen identisch aufgebaut sind, werden Haftungsprobleme zwischen den verpressten Schichten vermieden. Der Begriff im Wesentlichen soll dabei berücksichtigen, dass kleine Unterschiede in der Zusammensetzung der beiden Bindemittel möglich sein können, der Grundwerkstoff, also das beispielsweise verwendete Harz, identisch ist. Vorzugsweise besteht das Gemischpulver aus 80 bis 90 Gew.% aus Pigmenten und zu 10 bis 20 Gew.% aus dem zweiten Bindemittel. Um eine möglichst hohe Deckkraft der Grundierungsschicht erzielen zu können, sind die Pigmente insbesondere vorzugsweise weiß.

Als erstes und/oder zweites Bindemittel können pulverförmiges Melaminharz, Harnstoffharz, Acrylate, Ethylen-Vinylacetat-Copolymere und dergleichen verwendet werden.

Vorzugsweise wird das Gemischpulver in einer Menge zwischen 5 und 120 g/m² aufgestreut.

Die in dem Gemischpulver verwendeten pulverförmigen Pigmente können aus einem einzelnen Pigment oder aus einem Gemisch verschiedener Pigmente bestehen.

Als Pigmente können Titanoxid, Kalziumkarbonat, Bariumsulfat oder dergleichen verwendet werden. Beim Einsatz von Kalziumkarbonat als Pigment liegt die Auftragsmenge des Gemischpulvers bei 60 bis 80 g/m² bei einem angestrebten L-Wert nach dem CIELAB-Farbsystem von ca. 90 wird bei einem Gemischpulver, das nur aus Titandioxid und dem zweiten Bindemittel besteht, eine Menge von 12 bis 16 g/m² benötigt.

Wenn keine hochweiße Grundierung notwendig ist, können den weißen Pigmenten beispielsweise (preiswerte) Eisenoxidpigmente zugemischt werden, sodass sich eine leicht getönte Farbe der Grundierung einstellt.

Eine Vorrichtung zum Aufstreuen des Gemischpulvers besteht zumindest aus:
a) einem Trichter,
b) einer unterhalb des Trichters rotierbar angeordneten Walze, die über ihren Umfang mit Vertiefungen versehen ist,
c) einem die Vertiefungen überstreichenden Rakel,
d) einer die Vertiefungen durchstreifenden Bürste,
e) einem unterhalb der Walze angeordneten oszillierend angetriebenen Sieb.

Das Sieb ist vorzugsweise zwischen 5 und 10 cm oberhalb der Oberseite des Kuchens angeordnet. Eine Streuvorrichtung zum Herstellen eines Spänevlieses das zu Spanplatten verpressbar ist, ist aus der DE 29 22 814 A1 bekannt. Die DE 25 23 515 A1 beschreibt eine Vorrichtung zum Streuen eines Spänekuchens mit einer rotierenden Trommel, um die Späne beim Streuen in ihrer Richtung ausrichten zu können.

Mit Hilfe einer Zeichnung sollen Ausführungsbeispiele der Erfindung nachfolgend kurz erläutert werden. Es zeigen:
- Figur 1 -: ein Prozessschema zur Herstellung einer Holzfaserplatte,
- Figur 2 -: eine schematisierte Teildarstellung des Fertigungsprozesses,

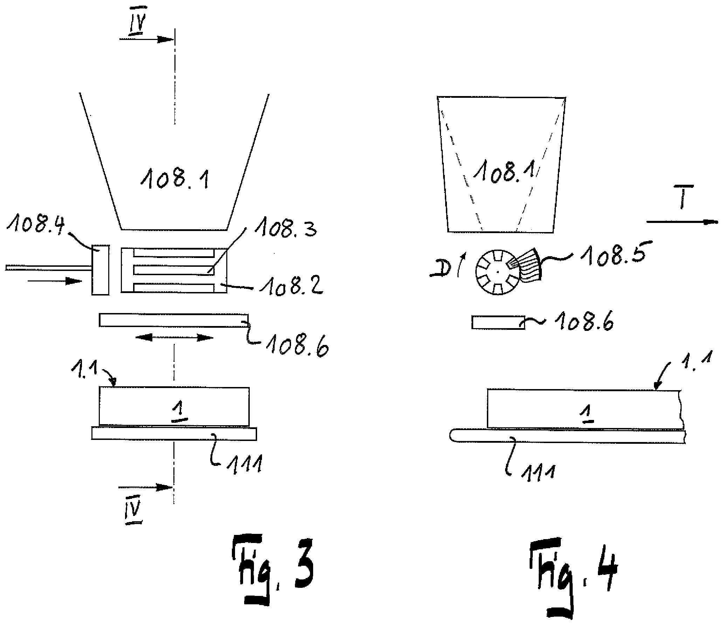

- Figur 3 -: die schematische Schnittdarstellung einer Streuvorrichtung quer zur Transportrichtung,
- Figur 4 -: den Schnitt entlang der Linie IV-IV nach Figur 3.

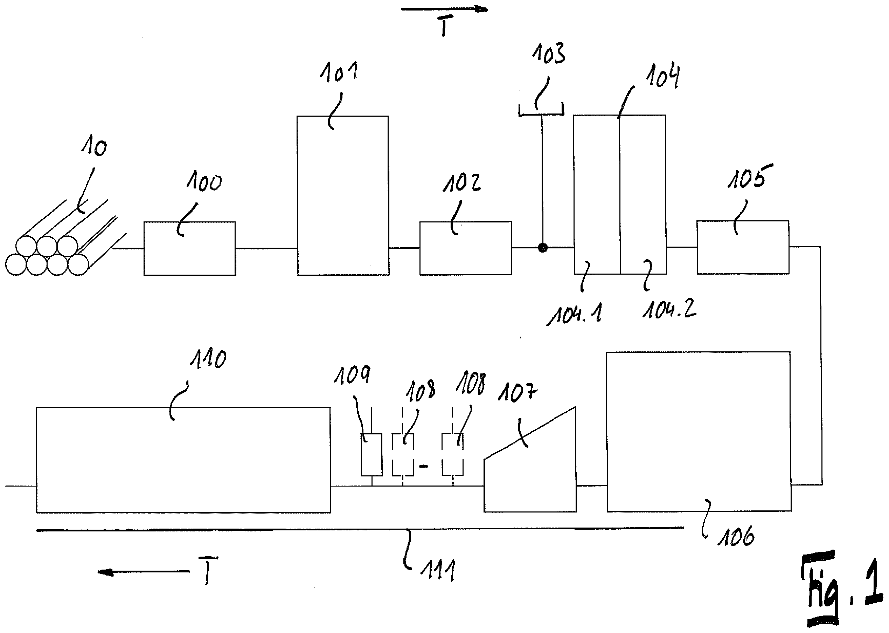

Anhand von Figur 1 soll das erfindungsgemäße Herstellungsverfahren erläutert werden. Bereitgestelltes Rundholz 10 wird zunächst in einem Zerspaner 100 zu Holzhackschnitzeln HS zerkleinert und in einem sich daran anschließenden Kocher 101 gewaschen und gekocht. Die so vorbereiteten Hackschnitzel HS werden dann in den Refiner 102 überführt, in dem sie zu Holzfasern HF aufgeschlossen werden. In Transportrichtung T werden die Holzfasern HF in einer Beleimvorrichtung 103 mit einem ersten Bindemittel, beispielsweise Melaminharz, Harnstoffharz, Acrylat oder Ethylen-Vinylacetat-Copolymer beleimt. Die beleimten Holzfasern HF werden weiter transportiert und dann in einem Trockner 104 getrocknet. Der Trockner 104 besteht aus einem Vortrockner 104.1 und einem Nachtrockner 104.2. In dem Trockner 104 wird den Holzfasern HF eine etwa vorhandene Restfeuchte entzogen und das erste Bindemittel getrocknet. Nach dem Trockner 104 werden die Holzfasern HF zur Klassierung in den Sichter 105 transportiert, von dem aus sie in die erste Streuvorrichtung 106 gelangen. Über diese Streuvorrichtung 106 werden die Holzfasern HF dann auf ein hier nicht näher dargestelltes, in Transportrichtung T umlaufendes Transportband 111 zu einem Kuchen 1 gestreut. Dieser Faserkuchen 1 gelangt dann in die Vorpresse 107, die eine Vorverdichtung des Kuchens 1 vornimmt. In Transportrichtung T hinter der Vorpresse 107 ist mindestens eine zweite Streuvorrichtung 108 vorgesehen, in der das Grundierungsmittel 3 vorgesehen ist und mittels der zweiten Streuvorrichtung 108 auf die Oberseite 1.1 des Kuchens 1 aufgestreut wird. Vorzugsweise sind zwei oder drei zweite Streuvorrichtungen 108 in Transportrichtung T hintereinander angeordnet. Das Grundierungsmittel ist ein Gemischpulver aus Pigmenten und einem zweiten Bindemittel. Das Gemischpulver besteht zu 80 bis 90 Gew.% aus Pigmenten und zu 10 bis 20 Gew.% aus dem zweiten Bindemittel und wird in einer Menge zwischen 5 und 120 g/m² aufgestreut. Die aufgestreute Menge ist abhängig von der gewünschten Deckkraft der Grundierung. Nach dem das Gemischpulver auf den Kuchen 1 aufgestreut wurde, wird die Oberseite 1.1 über die Sprüheinrichtung 109 mit Wasser besprüht, wobei eine Menge etwa 10 bis 30 g/m² aufgesprüht wird. Anschließend wird der Kuchen 1 in die Heißpresse 110, die vorzugsweise eine Contipresse ist, transportiert und dort unter hohem Druck und hoher Temperatur zu einer Holzwerkstoffplatte 2 gewünschter Dicke verpresst.

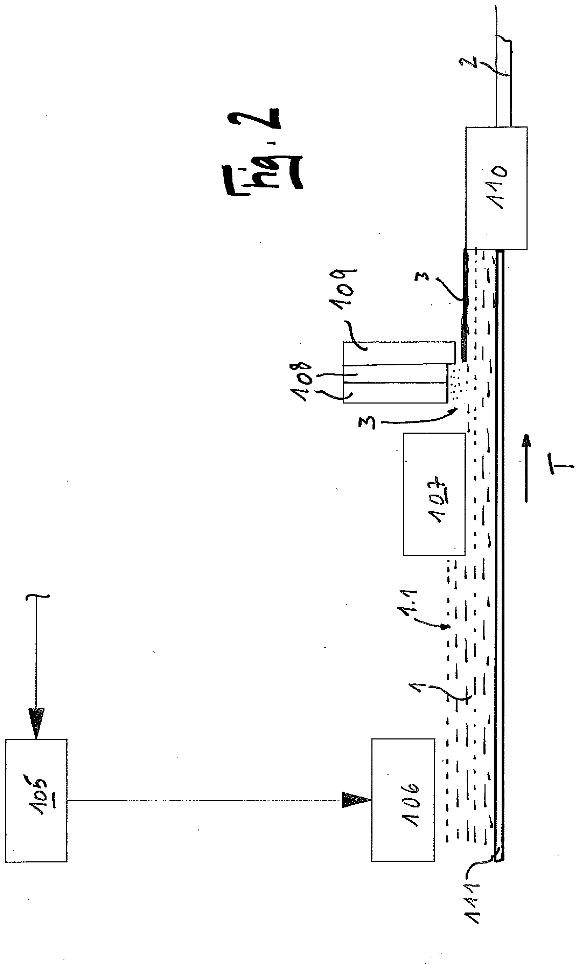

Der Aufbau der Streuvorrichtung 108 ist Figur 2 schematisch entnehmbar. Sie besteht aus einem Trichter 108.1 zur Aufnahme des Gemischpulvers, eine unterhalb des Trichters 108.1 angeordneten Walze 108.2, die über ihren Umfang mit Vertiefungen 108.3 versehen ist, einem die Vertiefungen 108.3 überstreichenden Rakel 108.4, einer die Vertiefungen 108.3 durchstreifenden Bürste 108.5 und einem unterhalb der Walze 108.2 angeordneten oszillierend angetrieben Sieb 108.6. Der Abstand des Siebs 108.6 zur Oberseite 1.1 des Kuchens 1 beträgt etwa zwischen 5 und 10 cm.

In den Trichter 108.1 wird das auf den Kuchen 1 aufzustreuende Gemischpulver eingefüllt. Das Gemischpulver fällt in die Vertiefungen 108.3 der rotierenden Walze 108.2. Die Steuerung der Auftragsmenge des Gemischpulvers erfolgt durch die Rotationsgeschwindigkeit der Walze. Über den Rakel 108.4 wird die Auftragsmenge über die Produktionsbreite konstant gehalten, indem die Vertiefungen 108.3 durch den Rakel 108.4 abgezogen werden. Die in Drehrichtung D der Walze 108.2 angeordnete Bürste 108.5 bürstet das Gemsichpulver aus den Vertiefungen 108.3 aus, in dem es diese durchstreift. Das Gemischpulver fällt dann auf das Sieb 108.6, das quer zur Transportrichtung T oszilliert und dadurch Inhomogenitäten in der Streuung auf der Oberseite 1.1 des Kuchens 1 ausgleicht.

Die Streumenge variiert abhängig von der benötigten Deckkraft und dem verwendeten Pigment zwischen 5 und 120 g Gemischpulver pro Quadratmeter. Bei einem angestrebten L-Wert nach dem CIELAB-Farbsystem von ca. 90 wird von einem Gemischpulver, das nur aus Titanoxid und Bindemittel besteht, eine Menge von 12 bis 16 g/m² benötigt. Beim Einsatz von Kalziumkarbonat als Pigment liegt die Auftragsmenge des Gemischpulvers bei 60 bis 80 g/m². Nach dem Durchlaufen der Contipresse 110 ist der überwiegende Teil (>90%) des Gemischpulvers auf der Oberseite 1.1 des Kuchens 1 fixiert. Der Rest befindet sich auf dem umlaufenden Pressband der Contipresse 110 und wird beim nächsten Umlauf auf der Oberseite 1.1 abgelegt. Dieser Prozess führt zu einer Vergleichmäßigung der Oberfläche bzw. einer Verringerung der Wolkigkeit der Grundierung. Durch die Verwendung von mehr als zwei zweiten Streuvorrichtungen 108 können in der in Transportrichtung T vorderen Streuvorrichtung108 Gemischpulver mit kostengünstigeren Pigmenten eingesetzt werden und in der letzten Streuvorrichtung 108 hochwertiges Titandioxid als Pigment verwendet werden.

Selbstverständlich kann auch durch das Aufstreuen des Gemischpulvers nur ein Teil der gewünschten Grundierung aufgetragen werden. Trotz des Aufstreuens auf den porösen Kuchen 1 konnte in Versuchen kein signifikantes Wegschlagen des Gemischpulvers in den Kuchen 1 (die Platte) beobachtet werden. Im Gegensatz zu Auftragswalzen hat eine Streuvorrichtung deutlich geringere Auftragsschwankungen. Dadurch kann eine Reduzierung der Auftragsmenge des Grundierungsmittels erreicht werden. Die Probleme, die beim Nassauftrag von Grundierungen durch Änderungen der Viskositäten durch Temperaturschwankungen, Verdunstung von Lüftungsmittel oder Alterungsphänomenen der Flotten auftreten können, werden durch den Auftrag des Gemischpulvers behoben. Eine Umstellung der Produktion von grundierten Platten auf nicht grundierte Platten ist innerhalb von wenigen Minuten möglich, weil nur die Streuvorrichtungen 108 und gegebenenfalls die Sprühvorrichtung 109 außer Betrieb genommen werden müssen. Auch ist eine Änderung der Deckkraft durch Variation der Auftragsmenge des Gemischpulvers schnell und problemlos möglich. Reste von flüssigen Grundierungen müssen nicht entsorgt werden. Anlagen müssen nicht gereinigt werden und auch das Pressband der Contipresse 110 ist nach einem Umlauf wieder pigmentfrei.

### Ausführungsbeispiel 1

Vor der Contipresse 110 wurde auf den aus Holzfasern HF gestreuten Kuchen 1, der eine Dicke von ca. 10 cm aufweist, mit Hilfe von zwei Streuvorrichtungen 108 ein Gemischpulver aus Kalziumkarbonat (85 Gew.%) und Melaminharzpulver (15 Gew.%) in einer Menge von 50 g/qm aufgestreut. Dabei wurden von jeder der beiden Streuvorrichtungen 108 jeweils 25 g/m² Gemischpulver gestreut. In einer dritten Streuvorrichtung 108 befand sich ein Gemischpulver in dem das Kalziumkarbonat durch Titanoxid ersetzt worden war. Dieses Gemischpulver wurde in einer Menge von 5 g/m² auf den Kuchen 1 mit dem Kalziumkarbonat-Melaminharz-Gemischpulver aufgestreut. Dann wurde in der Sprühvorrichtung 109 Wasser in einer Menge 30 g/m² auf das Gemischpulver aufgedüst. Der Kuchen 1 wurde anschließend in der Contipresse 110 zu einer 8 mm dicken HDF verpresst. Hinter der Presse wurde eine Probe gezogen und der L-Wert gemäß des CIELAB-Systems bestimmt. Es wurde ein Wert von 89,3 gemessen. Die Holzwerkstoffplatten 2, die trotz einseitiger Beschichtung keine Verzüge aufwiesen, wurden nach dem Abkühlen in einer Druckstraße durch einen Reinigungsschliff von losen Bestandteilen an der Oberfläche befreit und dann mit einer Kunstharzgrundierung (Melaminharz, ca. 20 g/m², Feststoffgehalt ca. 65 Gew.%) versehen. Dann wurde die Grundierung in einem Umlufttrockner getrocknet, mit einem Primer versehen und wieder getrocknet. Im Anschluss daran wurde sie im Tiefdruck mit einem Dekor bedruckt und mit einer Abdeck-/Transportschicht versehen und abschließen getrocknet und abgekühlt. Die Platte 2 wurde dann in einem weiteren Produktionsschritt mit einem Overlay und einem Gegenzug in einer Kurztaktpresse zu einem Laminat verpresst.

### Ausführungsbeispiel 2

Vor einer Contipresse 110 wurde auf die Oberseite 1.1 eines aus Holzfasern HF bestehenden Kuchens 1 mit einer Dicke von etwa 13 cm mit Hilfe von zwei Streuvorrichtungen 108 ein Gemisch aus Titanoxid (85 Gew.%) und Melaminharzpulver (15 Gew.%) mit einer Menge von 15 g/m² aufgestreut wird, wobei über jede Streuvorrichtung 108 jeweils 7,5 g/m² aufgestreut wurden. Über die Sprühvorrichtung 109 wurde dann auf das gestreute Gemischpulver Wasser in einer Menge 15 g/m² aufgedüst. Der Kuchen 1 wurde anschließend in einer Contipresse 108 zu einer 10 mm dicken HDF-Platte verpresst. Hinter der Contipresse 110 wurde eine Probe gezogen und der L-Wert gemäß des CIELAB-Farbsystems bestimmt. Es wurde ein Wert von 90,1 gemessen. Die Holzwerkstoffplatten 2, die trotz einseitiger Beschichtung keine Verzüge aufwiesen, wurden nach dem Abkühlen in einer Druckstraße durch einen Reinigungsschliff von losen Bestandteilen an der Oberfläche befreit und dann mit einer Kunstharzgrundierung (Melaminharz, ca. 20 g/m², Feststoffgehalt ca. 25 Gew.%) versehen. Dann wurde die Grundierung in einem Umlufttrockner getrocknet mit einem Primer versehen und wieder getrocknet. Im Anschluss daran wurde sie im Digitaldruck mit einem Dekor bedruckt und mit einer Abdeck-/Transportschicht versehen und abschließen getrocknet und abgekühlt. Die Holzwerkstoffplatte 2 wurde dann in einem weiteren Produktionsschritt mit einem Overlay und einem Gegenzug in einer Kurztaktpresse zu einem Laminat verpresst.

### Ausführungsbeispiel 3

Vor einer Contipresse 110 wurden auf einen Kuchen 1 aus Holzfasern HF mit einer Dicke von ca. 13 cm mittels drei Streuvorrichtungen 108 ein Gemisch aus Kalziumkarbonat (85 Gew.%) und Melaminharzpulver (15 Gew.%) in einer Menge von 75 g/m² aufgestreut, wobei von jeder Streuvorrichtung (108) jeweils 25 g/m² aufgestreut wurden. Mittels der Sprühvorrichtung 109 wurden dann auf das gestreute Gemischpulver 30 g Wasser pro m² aufgedüst. Der Kuchen 1 wurde in der Contipresse 110 zu einer 10 mm dicken HDF-Platte verpresst. Hinter der Contipresse 110 wurde eine Probe gezogen und der L-Wert gemäß des CIELAB-Farbsystems bestimmt. Es wurde ein Wert von 86,1 gemessen. Die Holzwerkstoffplatten 2, die trotz einseitiger Beschichtung keine Verzüge aufwiesen, wurden nach dem Abkühlen in einer Druckstraße durch einen Reinigungsschliff von losen Bestandteilen von der Oberfläche befreit und dann mit einer Kunstharzgrundierung (Melaminharz: ca. 20 g/m², Feststoffgehalt: ca. 65 Gew.%) beschichtet. Dann wurde die Grundierung in einem Umlufttrockner getrocknet, mit einem Primer versehen und wieder getrocknet. Im Anschluss daran wurde sie im Digitaldruck mit einem Dekor bedruckt und mit einer Abdeck-/Transportschicht versehen und abschließend getrocknet und abgekühlt. Die Holzwerkstoffplatte 2 wurde dann in einem weiteren Produktionsschritt mit einem flüssigen Overlay und einem flüssigen Gegenzug in einer Kurztaktpresse zu einem Laminat verpresst.

### Bezugszeichenliste

- 1: Kuchen
- 1.1: Oberseite
- 2: Holzwerkstoffplatte / Platte
- 3: Grundierungsmittel
- 10: Rundholz

- 100: Zerspaner
- 101: Kocher
- 102: Refiner
- 103: Beleimvorrichtung
- 104: Trockner

- 104.1: Vortrockner
- 104.2: Nachtrockner
- 105: Sichter
- 106: erste Streuvorrichtung
- 107: Vorpresse

- 108: zweite Streuvorrichtung
- 108.1: Trichter
- 108.2: Walze
- 108.3: Vertiefungen
- 108.4: Rakel

- 108.5: Bürste
- 108.6: Sieb
- 109: Sprühvorrichtung
- 110: Heißpresse
- 111: Transportband
- D: Drehrichtung
- HS: Holzhackschnitzel
- HF: Holzfasern
- T: Transportrichtung

## Patentansprüche

1. Verfahren zur Herstellung einer Holzwerkstoffplatte (2), insbesondere einer MDF- oder HDF-Platte, indem ein Kuchen (1) aus mit einem ersten Bindemittel benetzten Holzspänen oder Holzfasern gestreut wird, der anschließend in einer Heißpresse (2) zu einer Platte gewünschter Dicke verpresst wird, wobei vor dem Verpressen auf eine Oberseite (1.1) des Kuchens (1) ein Gemischpulver aus Farbpigmenten und einem zweiten Bindemittel als Grundierungsmittel (3) aufgestreut wird, **dadurch gekennzeichnet, dass** das Gemischpulver mit Hilfe von mindestens zwei Streuvorrichtungen (108) aufgestreut wird und der Kuchen (1) nach dem Aufstreuen des Gemischpulvers mit Wasser besprüht wird.

2. Verfahren nach Anspruch 1, **dadurch gekennzeichnet, dass** das Wasser in einer Menge von 10 bis 30g/m² aufgesprüht wird.

3. Verfahren nach Anspruch 1 oder 2, **dadurch gekennzeichnet, dass** das erste Bindemittel und das zweite Bindemittel zumindest im Wesentlichen identisch sind.

4. Verfahren nach einem der vorstehenden Ansprüche, **dadurch gekennzeichnet, dass** das Gemischpulver zu 80 bis 90 Gew.% aus Pigmenten und zu 10 bis 20 Gew.% aus dem zweiten Bindemittel besteht.

5. Verfahren nach einem der vorstehenden Ansprüche, **dadurch gekennzeichnet, dass** die Pigmente weiß sind.

6. Verfahren nach einem der vorstehenden Ansprüche, **dadurch gekennzeichnet, dass** als erstes und/oder zweites Bindemittel pulverförmiges Melaminharz, Harnstoffharz, Acrylat oder Ethylen-Vinylacetat-Copolymere verwendet werden.

7. Verfahren nach einem der vorstehenden Ansprüche, **dadurch gekennzeichnet, dass** das Gemischpulver in einer Menge zwischen 5 und 120g/m² aufgestreut wird.

8. Verfahren nach einem der Patentansprüche 4 bis 7, **dadurch gekennzeichnet, dass** die pulverförmigen Pigmente aus einem einzelnen Pigment oder einem Gemisch verschiedener Pigmente bestehen.

9. Verfahren nach Anspruch 5, **dadurch gekennzeichnet, dass** als Pigmente Titanoxid, Kalziumkarbonat oder Bariumsulfat verwendet werden.

10. Verfahren nach Anspruch 5 oder 9, **dadurch gekennzeichnet, dass** den weißen Pigmenten Eisenoxidpigmente zugemischt werden.

## Claims

1. A method for producing a wood-based board (2), especially an MDF or HDF board, by scattering a mat (1) of wood fibers or wood chips wetted with a first binder, which is subsequently pressed in a hot-press (2) to form a board of desired thickness, the pressing being preceded by the scattered application, to a top side (1.1) of the mat (1), of a powder mixture of color pigments and a second binder as priming agent (3), **characterized in that** the powder mixture is scattered on by means of at least two scattering apparatuses (108) and the mat (1) after the scattered application of the powder mixture is sprayed with water.

2. The method as claimed in claim 1, **characterized in that** the water is sprayed on in an amount of 10 to 30 g/m².

3. The method as claimed in claim 1 or 2, **characterized in that** the first binder and the second binder are at least substantially identical.

4. The method as claimed in any of the preceding claims, **characterized in that** the powder mixture consists to an extent of 80 to 90 wt% of pigments and of 10 to 20 wt% of the second binder.

5. The method as claimed in any of the preceding claims, **characterized in that** the pigments are white.

6. The method as claimed in any of the preceding claims, **characterized in that** pulverulent melamine resin, urea resin, acrylate, or ethylene-vinyl acetate copolymers are used as first and/or second binder.

7. The method as claimed in any of the preceding claims, **characterized in that** the powder mixture is scattered on in an amount of between 5 and 120 g/m².

8. The method as claimed in any of claims 4 to 7, **characterized in that** the pulverulent pigments consist of an individual pigment or a mixture of different pigments.

9. The method as claimed in claim 5, **characterized in that** pigments used comprise titanium oxide, calcium carbonate, or barium sulfate.

10. The method as claimed in claim 5 or 9, **characterized in that** the white pigments are admixed with iron oxide pigments.

## Revendications

1. Procédé de fabrication d'une plaque en matériau dérivé du bois (2), en particulier d'une plaque MDF ou HDF, par épandage d'un gâteau (1) en copeaux de bois ou en fibres de bois mouillés par un premier liant, lequel est ensuite pressé dans une presse à chaud (2) pour former une plaque d'une épaisseur souhaitée, dans lequel une poudre de mélange de pigments colorés et d'un second liant est dispersée en tant qu'apprêt (3) sur une face supérieure (1.1) du gâteau (1) avant le pressage, **caractérisé en ce que** la poudre de mélange est épandue à l'aide d'au moins deux dispositifs d'épandage (108) et le gâteau (1) est exposé à une pulvérisation d'eau après le que la poudre de mélange a été épandue.

2. Procédé selon la revendication 1, **caractérisé en ce que** l'eau est pulvérisée en une quantité de 10 à 30 g/m².

3. Procédé selon la revendication 1 ou 2, **caractérisé en ce que** le premier liant et le second liant sont au moins sensiblement identiques.

4. Procédé selon l'une quelconque des revendications précédentes, **caractérisé en ce que** la poudre de mélange est constituée de 80 à 90 % en poids de pigments et de 10 à 20 % en poids du second liant.

5. Procédé selon l'une quelconque des revendications précédentes, **caractérisé en ce que** les pigments sont blancs.

6. Procédé selon l'une quelconque des revendications précédentes, **caractérisé en ce que** sont utilisés en tant que premier et/ou second liant une résine de mélamine pulvérulente, une résine d'urée, un acrylate ou un copolymère d'éthylène et d'acétate de vinyle.

7. Procédé selon l'une quelconque des revendications précédentes, **caractérisé en ce que** la poudre de mélange est épandue en une quantité comprise entre 5 et 120 g/m².

8. Procédé selon l'une quelconque des revendications 4 à 7, **caractérisé en ce que** les pigments pulvérulents sont constitués d'un seul pigment ou d'un mélange de différents pigments.

9. Procédé selon la revendication 5, **caractérisé en ce que** sont utilisés comme pigments de l'oxyde de titane, du carbonate de calcium ou du sulfate de baryum.

10. Procédé selon la revendication 5 ou 9, **caractérisé en ce que** des pigments d'oxyde de fer sont mélangés aux pigments blancs.
